# FASCICULE DE BREVET EUROPEEN

(11) **EP 0 414 609 B1**
(45) Date de publication et mention de la délivrance du brevet: **26.05.1993**
(21) Numéro de dépôt: 90402331.4
(22) Date de dépôt: 22.08.1990
(51) Int. Cl.: F02K 1/70

(54) **Inverseur à grilles sans capot coulissant pour turboréacteur**
Kaskadenschubumkehrvorrichtung ohne Schiebehaube für ein Strahltriebwerk
Jet engine cascade thrust reverser without sliding cowling

(30) Priorité: 23.08.1989 FR 8911155
(43) Date de publication de la demande: 27.02.1991
(73) Titulaire: HISPANO-SUIZA Société anonyme dite:, F-92213 Saint Cloud (FR)
(72) Inventeur: Dubois, Claude Achille Germain, Gonfreville l'Orcher, F-76700 Honfleur (FR)
(74) Mandataire: Berrou, Paul

(56) Documents cités:
- EP-A- 0 315 524
- GB-A- 2 045 179
- US-A- 3 036 431
- US-A- 3 511 055
- US-A- 3 601 992

## Description

La présente invention concerne un inverseur de poussée de turboréacteur à double flux.
Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

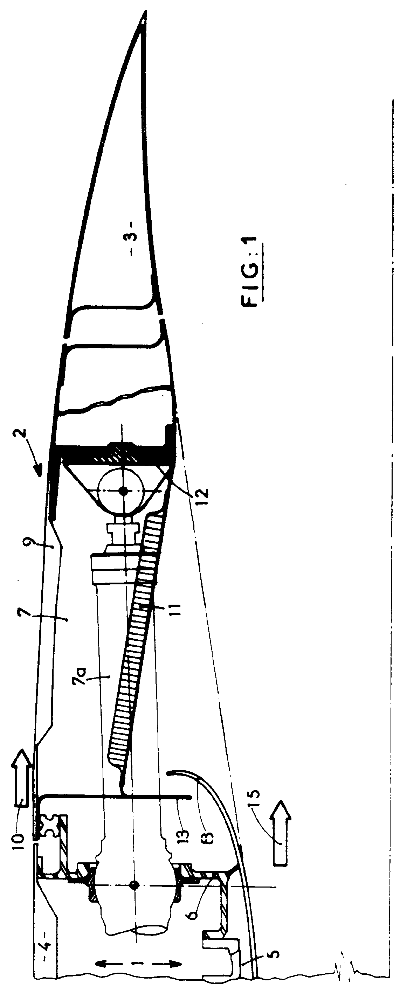

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et un cône arrière fixe 3. Ladite partie fixe amont 1 comprend un panneau externe 4 de nacelle, un panneau externe 5 de veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, communément appelés portes 7, ce nombre pouvant varier en fonction des applications particulières, par exemple deux, trois ou quatre portes 7 formant une ensemble annulaire, éventuellement en coopération avec une partie fixe, selon le mode de montage de l'ensemble de propulsion constitué par le turboréacteur sur l'avion.

Chaque porte 7 est associée à un moyen de commande des déplacements tels qu'un vérin 7a.

En aval, amont et aval étant définis par rapport au sens normal de circulation des gaz en poussée directe, la partie fixe 1 se termine par un bord de déviation 8 fixé sous le cadre avant 6 et destiné à assurer une orientation adéquate de l'écoulement, en position d'inversion de poussée. Chaque porte 7 est composée d'un panneau externe 9 venant se placer en position fermée dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur frontal 13.

Des exemples de réalisation d'inverseur de poussée de turboréacteur à portes basculantes de ce type sont décrits notamment par FR-A-2 486 153, FR-A-2 506 843 et FR-A-2 559 838 ainsi que par FR-A-2 030 034.

On connaît également par US-A-3 605 411 un inverseur de poussée dans lequel chaque porte est associée par des moyens de liaison à une partie interne disposée du côté radialement interne de la porte de manière que, en position fermée de la porte, le profil de face interne de ladite partie interne suit la ligne théorique de délimitation aérodynamique du profil de la veine de circulation du flux secondaire, supprimant ainsi les perturbations aérodynamiques et la perte de rendement provoquées par une cavité à l'avant de la porte. FR-A-2 638 207 et US-A-3 601 992 décrivent également des inverseurs de poussée à portes pivotantes, l'inverseur selon FR-A-2 638 207 comportant un élément externe et un élément interne reliés l'un à l'autre et mobiles l'un par rapport à l'autre. FR-A-2 559 838 cité ci-dessus a posé le problème du contrôle du jet inversé à la sortie d'un inverseur de poussée lors du fonctionnement en inversion de poussée et a recherché une solution dans des aménagements apportés à la forme des bords du puits d'inversion dégagé dans le capotage lors de l'ouverture des portes de l'inverseur. Dans certaines applications toutefois, notamment dans le cas d'un inverseur de poussée associé à un turboréacteur monté sur avion en position dite de queue pour lequel un contrôle rigoureux des nappes du flux inversé devient nécessaire, les aménagements antérieurement connus qui peuvent comporter également, comme dans l'exemple d'inverseur à portes décrit en référence à la figure 1, un ensemble de déflecteurs associés à chaque porte, tel que le déflecteur frontal 13, se révèlent insuffisants.

Les buts de l'invention sont ainsi d'obtenir sur un inverseur de poussée de turboréacteur une amélioration du contrôle des nappes du flux inversé, une réduction des éléments mobiles en disposant d'une cinématique simple et notamment en évitant la translation d'un capot coulissant de grandes dimensions. Un des buts de l'invention est également de réduire la masse et l'encombrement externe en jet direct d'un inverseur de poussée répondant par ailleurs aux impératifs de fonctionnement tant en jet direct qu'en inversion de poussée, ces critères étant importants dans les applications aéronautiques concernées.

Ces buts sont atteints conformément à l'invention en disposant des grilles d'éjection permettant le contrôle en direction du flux inversé et placées de part et d'autre du dispositif de manoeuvre de porte, entre une porte externe qui est susceptible de pivoter autour d'un pivot principal intégré au cône arrière fixe dudit inverseur de poussée et un volet interne pivotant autour d'un pivot secondaire susceptible de coulisser en translation vers l'arrière lors du passage de l'inverseur en position d'inversion de poussée, lesdits porte externe et volet interne étant reliés chacun respectivement par une bielle audit dispositif de manoeuvre de porte.

D'autres caractéristiques et avantages de l'invention seront mieux compris à la lecture de la description qui va suivre d'un mode de réalisation de l'invention, en référence aux dessins annexés sur lesquels :
- la figure 1 représente une demi vue schématique, en coupe longitudinale par un plan passant par l'axe de rotation d'un turboréacteur, d'un inverseur de poussée à portes pivotantes, en position fermée, d'un type connu et qui a fait précédemment l'objet d'une description ;
- la figure 2a représente, dans une vue analogue à celle de la figure 1, un inverseur de poussée à portes pivotantes et à grilles, en position fermée, correspondant à un fonctionnement en poussée directe, selon un mode de réalisation de l'invention ;
- la figure 2b représente, dans une vue analogue à celle de la figure 2a, l'inverseur de poussée à portes pivotantes et à grilles représenté sur la figure 2a, en position ouverte correspondant à un fonctionnement en inversion de poussée.

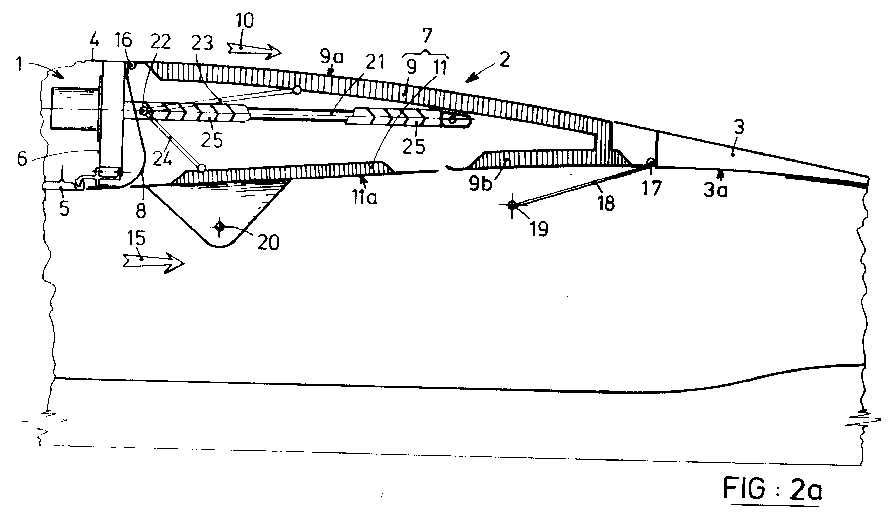

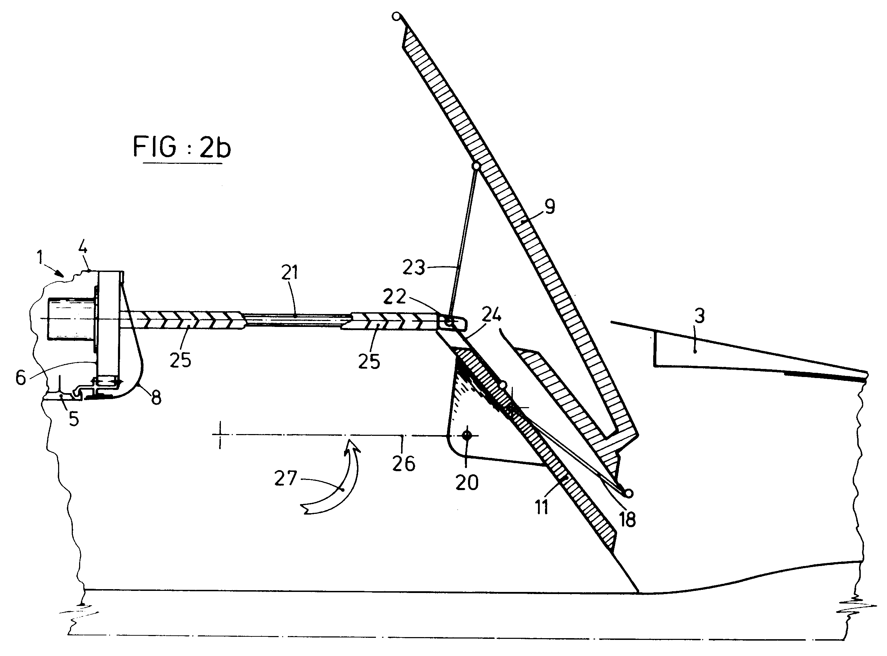

Selon un mode de réalisation de l'invention, schématiquement représenté sur les figures 2a et 2b, un inverseur de poussée susceptible d'effectuer lors des phases pertinentes de vol d'un avion l'inversion du flux secondaire d'un turboréacteur associé à double flux, comporte les ensembles et principaux éléments qui ont été précédemment décrits en référence à la figure 1 dans un exemple connu d'un inverseur de poussée à portes pivotantes. On conservera les mêmes références de ces éléments lorsqu'ils sont identiques ou correspondants. L'inverseur de poussée conforme à l'invention comporte ainsi comme précédemment la partie fixe amont 1 composée du panneau externe 4 de nacelle, du panneau 5 de paroi externe de veine du flux secondaire symbolisé par la flèche 15, panneau dont l'extrémité aval est prolongée par le bord de déviation 8, les panneaux 4 et 5 étant reliés par le cadre avant 6 qui supporte un dispositif de manoeuvre de porte. L'inverseur comporte également la partie mobile 2 constituée par des portes pivotantes 7 et vers l'aval, un cône arrière fixe 3, amont ou avant et arrière ou aval étant toujours utilisés en prenant comme référence le sens normal de circulation du flux dans la veine, en poussée directe.

Chaque porte pivotante 7 se compose, d'une part, d'une porte externe 9 dont la paroi externe 9a constitue dans la position fermée représentée sur la figure 2a correspondant à un fonctionnement en poussée directe la paroi de délimitation aérodynamique du flux extérieur au moteur représenté par la flèche 10 et,d'autre part, d'un volet interne 11 dont la paroi interne 11a située dans le prolongement de la paroi interne dudit panneau fixe amont 5 correspond à la ligne de délimitation aérodynamique externe de la veine du flux secondaire représenté par la flèche 15. On notera que dans le mode de réalisation représenté sur les figures 2a et 2b que la porte externe 9 comporte, dans sa partie aval, un élément interne solidaire 9b qui effectue le raccordement entre les parois internes 11a du volet interne 11 et 3a du cône arrière fixe 3 de l'inverseur. De manière en soi connue, des joints d'étanchéité 16 et 17 sont disposés respectivement en amont et en aval sur le pourtour de la porte externe 9 et assurent l'étanchéité de la veine fluide entre le panneau externe 4 de la partie fixe amont 1 et la porte externe 9 et entre la paroi interne 3a du cône arrière fixe 3 et l'élément interne 9b de la porte externe 9.

Ladite porte externe 9 est reliée par tout moyen connu symbolisé par la liaison 18 à un pivot principal fixe 19 qui est intégré à la structure fixe de l'inverseur et notamment au cône arrière fixe 3. Le volet interne 11 est solidarisé à un pivot secondaire 20. Dans le mode de réalisation représenté sur les figures 2a et 2b, le dispositif de manoeuvre de porte comporte une vis à billes 21 dont l'écrou 22 est relié à la fois par une bielle 23 à la porte externe 9 et par une bielle 24 au volet interne 11 de la porte 7. De manière remarquable, conforme à l'invention, de part et d'autre de ladite vis à billes 21, sont disposées des grilles d'éjection 25 placées entre la partie amont de ladite porte externe 9 et le volet interne 11.

Comme schématiquement représenté sur la figure 2b, par translation longitudinale de l'écrou 22, le long de la vis à billes 21, parallèlement à l'axe de l'inverseur de poussée, le dispositif de manoeuvre de porte en actionnant la bielle 23, fait pivoter la porte externe 9 autour de son pivot principal 19 et par l'intermédiaire de la bielle 24, entraîne en translation le pivot secondaire 20 du volet interne 11 sur le chemin schématisé en 26, entraînant ledit volet interne 11 en coulissement vers l'arrière et en rotation autour dudit pivot secondaire 20 pour prendre la position schématisée sur la figure 2b. Dans cette configuration, le puits d'inversion est dégagé par la porte 7, le volet interne 11 forme un obstacle dans le canal annulaire de circulation du flux secondaire qui se trouve dévié. Le bord supérieur dudit volet interne 11 se raccorde à l'extrémité aval des grilles d'éjection 25 qui contrôlent en direction le flux inversé symbolisé par la flèche 27.

Le dimensionnement des différents éléments de la porte 7 ainsi que le choix de l'emplacement du pivot principal 19 peuvent avantageusement être effectués de manière à équilibrer la porte 7 sur ledit pivot principal 19, réduisant ainsi les sollicitations en efforts mécaniques développés dans la vis à billes 21 lors des manoeuvres de la porte, tant à l'ouverture qu'à la fermeture de la porte 7.

Comme noté précédemment, les dispositions avantageuses de l'invention, associant des grilles d'éjection 25 à une porte 7 d'inverseur de poussée, sont particulièrement bien adaptées pour une utilisation sur moteur d'avion situé en position dite "de queue" dans laquelle un contrôle rigoureux des nappes du flux inversé est nécessaire pour éviter des interférences dommageables.

## Revendications

1. Inverseur de poussée de turboréacteur à double flux comportant des portes pivotantes (7) susceptibles, en position fermée, de s'intégrer dans la paroi extérieure du canal annulaire du flux secondaire et, en position ouverte, de dévier le flux secondaire, dans lequel chaque porte pivotante (7) est constituée, d'une part, d'une porte externe (9), raccordée à ses extrémités, en position de poussée directe, du côté amont, à la partie externe fixe (4) de l'inverseur et, du côté aval, aux lignes externe et interne du cône arrière fixe (3) de l'inverseur et, d'autre part, d'un volet interne (11) constituant un obstacle au flux secondaire en position d'inversion de poussée et raccordé à ses extrémités, en position de poussée directe, côté amont, à la paroi interne fixe (5) de l'inverseur et, du côté aval, à la paroi interne aval (9b) de la porte externe (9), la porte externe (9) et le volet interne (11) étant mobiles l'un par rapport à l'autre et chaque porte (7) étant associée à un dispositif (21) de manoeuvre de porte caractérisé en ce que des grilles d'éjection (25) permettant le contrôle en direction du flux inversé sont placées de part et d'autre dudit dispositif (21) de manoeuvre de porte, entre ladite porte externe (9) qui est susceptible de pivoter autour d'un pivot principal (19) intégré audit cône arrière fixe (3) et ledit volet interne (11) qui pivote autour d'un pivot secondaire (20) susceptible de coulisser en translation vers l'arrière lors du passage de l'inverseur en position d'inversion de poussée, lesdits porte externe (9) et volet interne (11) étant reliés chacun respectivement par une bielle (23, 24) audit dispositif (21-22) de manoeuvre de porte.

2. Inverseur de poussée de turboréacteur selon la revendication 1 dans lequel le dispositif de manoeuvre de chaque porte comporte une vis à billes (21) dont l'écrou (22) est relié respectivement par chacune desdites bielles (23, 24) à la porte externe (9) et au volet interne (11) de porte, de manière à assurer le pivotement de la porte externe (9) autour dudit pivot principal fixe (19) ainsi que le pivotement du volet interne (11) autour dudit pivot secondaire (20) en même temps que le coulissement en translation vers l'arrière de l'ensemble volet interne (11) et pivot secondaire (20), dégageant ainsi, lors du fonctionnement en inversion de poussée, le puits d'inversion.

3. Inverseur de poussée de turboréacteur selon l'une des revendications 1 ou 2 dans lequel ledit pivot principal fixe (19) est situé sur la structure fixe de l'inverseur à un emplacement tel que, à l'ouverture de la porte (7) la résultante des efforts combinant le poids des éléments mobiles, les poussées du flux et les efforts aérodynamiques passe par ledit axe du pivot principal (19), ladite porte (7) étant ainsi équilibrée sur ledit pivot principal (19) de manière à réduire les sollicitations développées dans le dispositif (21) de manoeuvre.

## Patentansprüche

1. Schubumkehrvorrichtung für ein Mantelstromtriebwerk mit schwenkbaren Klappen (7), die sich in geschlossener Position in die Außenwandung des ringförmigen Sekundärstromkanals einfügen und in geöffneter Position den Sekundärstrom umlenken können und die jeweils bestehen aus einer Außenklappe (9), die in der Direktschubposition mit ihren Enden stromaufwärts an den festen äußeren Teil (4) der Schubumkehrvorrichtung und stromabwärts an die äußeren und inneren Linien des festen hinteren Konus (3) der Schubumkehrvorrichtung anschließt, und einer lnnenklappe (11 ), die in der Schubumkehrposition ein Hindernis für die Sekundärströmung bildet und in der Direktschubposition mit ihren Enden stromaufwärts an die innere feste Wandung (5) der Schubumkehrvorrichtung und stromabwärts an die innere stromabwärtige Wandung (9b) der Außenklappe (9) anschließt, wobei die Außenklappe (9) und die lnnenklappe (11) relativ zueinander bewegbar sind und wobei jeder schwenkbaren Klappe (7) eine Klappenbetätigungsvorrichtung (21) zugeordnet ist, dadurch gekennzeichnet, daß zu beiden Seiten der genannten Klappenbetätigungsvorrichtung (21) zwischen der Außenklappe (9), die um einen in den hinteren festen Konus (3) intergrierten Hauptzapfen (19) verschwenkbar ist, und der lnnenklappe (11), die um einen sekundären Zapfen (20) verschwenkt wird, der beim Übergang der Schubumkehrvorrichtung in die Schubumkehrposition in einer Translationsbewegung nach hinten verschiebbar ist, Auswurfgitter (25) angeordnet sind, die die Richtungssteuerung der Umkehrströmung ermöglichen, wobei die Außenklappe (9) und die lnnenklappe (11) jeweils über eine Pleuelstange (23. 24) mit der Klappenbetätigungsvorrichtung (21 -22) verbunden sind.

2. Schubumkehrvorrichtung für ein Strahltriebwerk nach Anspruch 1, bei der die Klappenbetätigungsvorrichtung eine Kugelumlaufspindel (21) aufweist, deren Mutter (22) über jede der genannten Pleuelstangen mit der Außenklappe (9) bzw. der lnnenklappe (11) derart verbunden, daß sie die Schwenkbewegung der Außenklappe (9) um den festen Hauptzapfen (19) und die Schwenkbewegung der lnnenklappe (11) um den sekundären Zapfen (20) gleichzeitig mit der Translationsverschiebung der aus der Innenklappe (11) und dem sekundären Zapfen (20) bestehenden Einheit nach hinten gewährleistet und damit im Schubumkehrbetrieb die Schubumkehrkanäle freisetzt.

3. Schubumkehrvorrichtung für ein Strahltriebwerk nach einem der Ansprüche 1 oder 2, bei der der Hauptzapfen (19) an der festen Struktur der Schubumkehrvorrichtung an einer solchen Stelle angeordnet ist, daß beim Öffnen der Klappe (7) die Kräfteresultierende, in der die Gewichte der beweglichen Elemente, die Strömungsschubkräfte und die aerodynamischen Kräften zusammengefaßt sind, durch die Achse des Hauptzapfens (19) verläuft, so daß die Klappe (7) auf dem Hauptzapfen (19) derart ausgewuchtet ist, daß die in der Klappenbetätigungsvorrichtung (21) entstehenden Belastungen reduziert werden.

## Claims

1. Bypass turbojet engine thrust reverser comprising pivoting shutters (7) capable, in the closed position, of incorporating themselves in the outer wall of the annular secondary flow duct and, in the open position, of deflecting the secondary flow, in which each pivoting shutter (7) is made up, on the one hand, of an outer shutter (9) connected at its ends, in direct thrust mode, on the upstream side, to the fixed outer part (4) of the thrust reverser and, on the downstream side, to the outer and inner lines of the fixed rear cone (3) of the thrust reverser and, on the other hand, of an inner flap (11) constituting an obstacle to the secondary flow in the reverse thrust position and connected at its ends, in direct thrust mode, on the upstream side to the fixed inner wall (5) of the thrust reverser and, on the downstream side, to the inner wall (9b) of the outer shutter (9), the outer shutter (9) and the inner flap (11) being movable in relation to one another and each shutter (7) being associated with a shutter operating device (21) characterised in that ejector cascades (25) enabling the direction of the flow to be controlled are placed on either side of the said shutter operating device (21), between the said outer shutter (9) which is capable of pivoting about a main pivot (19) incorporated in the said fixed rear cone (3) and the said inner flap (11) which pivots about a secondary pivot (20) capable of sliding in longitudinal displacement towards the rear when the thrust reverser is in the reverse thrust position, the said outer shutter (9) and inner flap (11) each being connected respectively by a connecting rod (23, 24) to the said shutter operating device (21-22).

2. Bypass turbojet engine thrust reverser in accordance with Claim 1 in which the shutter operating device comprises a ballscrew (21) of which the nut (22) is connected respectively by each of the said connecting rods (23, 24) to the outer shutter (9) and to the inner shutter flap (11) in such a way as to ensure the pivoting of the outer shutter (9) about the main fixed pivot (19) as well as the pivoting of the inner flap (11) about the said secondary pivot (20) at the same time as causing the inner flap assembly (11) and the secondary pivot (20) to slide towards the rear, thus opening up the thrust reversal cell when the thrust reverser is put into reverse thrust position.

3. Bypass turbojet engine thrust reverser in accordance with either of Claims 1 or 2 in which the fixed main pivot (19) is situated on the fixed structure of the thrust reverser at a point where, on the opening of the shutter (7) the resultant of the forces combining the weight of the movable elements, the thrust of the airflow and the aerodynamic forces passes through the said axis of the main pivot (19), the said shutter (7) being thus balanced about the said main pivot (19) so as to reduce the stresses developed in the operating device (21).
